# EUROPEAN PATENT APPLICATION

(11) **EP 4 660 131 A1**
(43) Date of publication of application: **10.12.2025**
(21) Application number: 24000066.1
(22) Date of filing: 05.06.2024
(51) Int. Cl.: C01B 3/04, B01J 35/45, C01B 13/02, F23D 14/32, F24H 1/00

(54) **HYDROGEN BURNER USING WATER THERMOLYSIS**

(71) Applicant: Nowakowski, Wieslaw, 87-122 Grebocin (PL); Nowakowski, Jakub, 87-122 Grebocin (PL)
(72) Inventor: Nowakowski, Wieslaw, 87-122 Grebocin (PL); Nowakowski, Jakub, 87-122 Grebocin (PL)

(57) **Abstract**

The subject of the invention is a hydrogen burner using water thermolysis, incorporating a hydrogen combustion chamber (1) containing heating nozzles (3) connected to a fuel transport duct (4), with at least one magneto (6) installed in its vicinity. This burner is characterised in that the chamber (1) contains water (2) in which a duct (6) with heat exchange medium is immersed, and the heating nozzles (3) are dir3ected towards the table of that water (2). The chamber (1) is made of heat-resistant steel and coated with a thermal insulation layer (5) on the outside. Water (2) in the chamber (1) contains transition metals acting as catalysts for water thermolysis, particularly such as cerium, nickel, molybdenum, or chromium.

## Description

The subject of the invention is a hydrogen burner using water thermolysis, a reaction chamber of which contains water, with an immersed duct containing heat exchange medium.

The European patent application EP4039637A1 discloses a device for splitting water into hydrogen and oxygen by thermolysis, i.e., by thermal decomposition of water at an elevated temperature. The said device contains: a reactor equipped with a heating system, an air inlet and outlet, at least one water inlet, and at least one oxygen filter, at least one hydrogen filter, an oxygen extraction pump, a hydrogen extraction pump, and at least one water injection pump. The said device is characterised in that it contains also a hydrogen separation chamber located outside the reactor, which contains a hydrogen pump. The invention also concerns a process of splitting water into hydrogen and oxygen using the above device. However, the said device does not contain a hydrogen combustion chamber.

The Polish patent PL242198B1, on the other hand, discloses a system of a heating boiler burning hydrogen that contains a shell, within which a steam and water chamber is installed, with a combustion chamber equipped with a burner immersed in heating medium installed inside. The steam and water chamber connected to the heat exchanger and a condensate container, filled with heating medium, form the primary heating circuit of the boiler. The heating boiler shell is filled inside with heating medium of the secondary circuit of the boiler, supplying heat to external terminal units. The combustion chamber forms a reactor located inside the steam and water chamber forming a part of the primary circuit of the heating medium. At least one duct supplying oxygen and hydrogen, and at least one duct supplying steam are routed to the burner. The steam and water chamber, the heat exchanger, and the condensate container are immersed in heating medium of the secondary circuit. A mixture of hydrogen and oxygen is supplied to the burner in the combustion chamber through an inlet duct, which is connected through a water fuse to a buffer container for a hydrogen and oxygen mixture, which, in turn, is connected to an electrolyser. In the described solution, the hydrogen boiler is connected to the electorolyser being a source of hydrogen and oxygen, forming one system. The burner can be connected to separate ducts supplying hydrogen and oxygen; where the oxygen and hyderogen supply ducts are connected through an oxygen buffer container and hydrogen buffer container to an oxygen chamber and a hydrogen chamber, respectively, of a membrane electrolyser with constant polarisation. In the described solution, the hydrogen boiler subunit is connected to the membrane electrolyser with constant polarisation being a source of hydrogen and oxygen, forming one system. However, this system does not use water thermolysis or newly generated hydrogen in successive reactions of its burning.

Whereas the European patent description EP1915518B1 discloses a reactor for producing ammonia for the reduction of nitrogen oxides in the exhaust gas flow from internal-combustion engines from a substance splitting off ammonia, in particular from urea or from an aqueous urea solution, with a reaction chamber which has at least one thermolysis chamber into which the substance splitting off ammonia can be introduced, characterised in that a burner is integrated into the reactor and is connected immediately upstream of the thermolysis chamber, wherein the burner and the thermolysis chamber merge into one another and its thermal energy generated during the combustion process can be fed into the thermolysis chamber of the reactor for the thermolytic splitting-off of ammonia.

Whereas the patent description US2007269687A1 discloses a device for hydrogen generation using heat. The device uses thermal splitting of water and operates in general without any supply of electrical energy. It is based on a concept of a membrane reactor, with two types of membranes enabling simultaneous splitting of hydrogen and oxygen in stoichiometric quantities from the reactor contents. The device has a specially adjusted geometry that results in a distribution of temperatures inside the reaction chamber enabling the use of hydrogen selective membranes.

The aim of the invention was to develop a relatively simple design of a hydrogen burner, in which a water thermolysis reaction can be initiated and additional hydrogen generated this way can be used in the combustion reaction, where the heat generated in the combustion reaction can be transferred using heat exchange medium, preferably, flowing water.

The subject of the invention is a hydrogen burner using water thermolysis, incorporating a hydrogen combustion chamber containing heating nozzles connected to a hydrogen transporting duct. At least one magneto is installed in the vicinity of the said nozzles. The said burner is characterised in that the chamber contains water in which a duct with heat exchange medium is immersed, and the heating nozzles are directed towards the table of the said water. The flame from the said nozzles directed towards water causes its thermolysis.

The burner chamber is made of heat-resistant steel and coated with a thermal insulation layer on the outside.

Preferably, the heating nozzles are made of heat-resistant steel or ceramic material, particularly of silicon carbide or aluminium oxide.

Preferably, the chamber is connected to the water container with a duct equipped with a system for adjusting the water level in the chamber.

Water in the combustion chamber contains transition metals acting as catalysts for water thermolysis, particularly such as cerium, nickel, molybdenum, or chromium. The said catalysts can be present, for example, in the duct with heat exchange medium, where, preferably, this duct is formed by a steel pipe, heat-resistant, with an alloy addition of cerium, nickel, molybdenum, or chromium. Optionally, catalysts are present in a form of nanoparticles diffused in water, and an ultrasound generator is preferably installed in the bottom part of the chamber, and supports their dispersion in water.

The developed design of the burner according to the invention enables the use of additional hydrogen generated by thermolysis of water. The water thermolysis is accelerated by transition metals being catalysts for this reaction. They may be present in the steel duct with heat exchange medium and/or in the form of nanopowder diffused in water. As the burner is equipped with an ultrasound generator, nanoparticles of these catalyst metals are effectively dispersed in water present in the burner reaction chamber. In general, the design of the said burner is simple, while ensuring a high effectiveness of conversion of the combustion heat into the heat exchange medium. This system uses hydrogen and oxygen, with water being the combustion product; therefore, it is a completely environmentally friendly solution. No harmful combustion products are generated during operation of the burner according to the invention.

A significant advantage of this solution is that the water is heated around the section of the heat exchanger through which the medium removing heat from the system flows, rather than heating the air (as conventional). The heat capacity of water, and thus its energy storage capability, is approximately 3470 times greater than that of air. This results in significantly less heat energy loss since energy loss through the walls of the air chamber is minimalized.

It's also worth highlighting that the device achieves very high energy efficiency by producing additional hydrogen fuel in the process. The thermal energy returned to the system is the combined energy from the combustion of the high-energy gas and the combustion of the hydrogen obtained through the thermolysis of water.

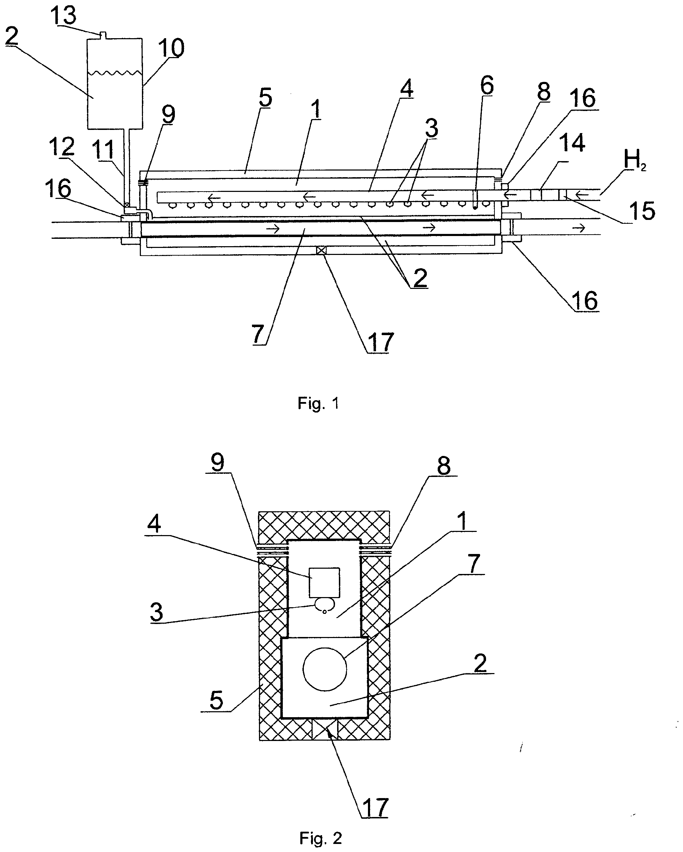

The example of the invention embodiment is presented in a drawing, in which Fig. 1 presents a longitudinal view of a hydrogen burner, and Fig. 2 presents its cross-section view.

### Example of embodiment

In one of the possible examples of embodiment, the hydrogen burner incorporates a chamber 1, containing water 2, above the table of which heating nozzles 3 are installed, supplied by a fuel mixture from a transport duct 4. The chamber 1 is made of heat-resistant steel and coated with a thermal insulation layer 5 on the outside, limiting heat exchange with the environment. At least one magneto 6 is installed near the nozzle 3, which initiates the fuel combustion process. A duct 7 with heat exchange medium passes through the chamber 1 in its part filled with water 2, which absorbs heat from the chamber 1 of the burner. The heat exchange medium flowing through the duct 7 is preferably water. The said duct 7 is formed by a steel pipe, heat resistant, with an alloy addition of cerium, nickel, molybdenum, and chromium, grade 1.4835 (235 MA). The duct 7 with heat exchange medium is preferably immersed in water 2 in the chamber 1 to the depth not exceeding 2 cm.

The fuel mix used is preferably hydrogen and oxygen, so the flame temperature may even exceed 2300°C, enabling thermal decomposition of water (water thermolysis) that can occur at a temperature of at least 900°C. Water thermolysis supplies an additional quantity of hydrogen (not supplied by the transport duct 4) for burning in the chamber 1. The initial mix of hydrogen and oxygen can be supplied to the chamber 1 through the transport duct 4 or the said duct supplies only hydrogen to the chamber 1, and the oxygen is supplied through an air inlet channel 8 located in the upper part of the chamber 1. Preferably, a pressure relief valve 9 is located in the upper part of the chamber 1.

The chamber 1 is preferably connected to a water container 10 with a duct 11 equipped with a system 12 for adjustment of the water 2 level in the chamber 1. The said system 12 is equipped with a water level sensor and a solenoid valve. The container 10 is equipped with a vent 13.

The magneto 6 is triggered by a electrical transducer 14, which can be located outside the chamber 1 in the transport duct 4. The transport duct 4 also contains a solenoid valve 15, which cuts off the fuel supply, if necessary. In their part located outside the chamber 1, the transport duct 4 and the heat exchanger duct 7 do not have to be made of materials resistant to high temperatures, including materials containing catalysts (the duct 7), and are fixed to the burner through connectors 16. An ultrasound generator 17 can be installed in the lower part of the chamber 1, which generates ultrasounds to disperse nanoparticles of transient metals such as cerium, nickel, molybdenum, or chromium, that catalyse the reaction of water thermolysis.

## Claims

1. A hydrogen burner using water thermolysis, incorporating a hydrogen burning chamber (1), in which heating nozzles (3) are installed, which are connected to a fuel transport duct (4), in the vicinity of which at least one magneto (6) is installed, **characterised in that** the chamber (1) contains water (2), in which a duct (7) with heat exchange medium is immersed, and heating nozzles (3) are directed towards the table of said water (2).

2. The burner according to claim 1, **characterised in that** the chamber (1) is made of heat-resistant steel and coated with a thermal insulation layer (5) on the outside.

3. The burner according to claim 1 or 2, **characterised in that** the heating nozzles (3) are made of heat-resistant steel or ceramic material, particularly, of silicon carbide or aluminium oxide.

4. The burner according to any of claims from 1 to 3, **characterised in that** the chamber (1) is connected to a water container (10) with a duct (11) equipped with a system (12) for adjustment of the water (2) level in the chamber (1).

5. The burner according to any of claims from 1 to 4, **characterised in that** water (2) in the chamber (1) contains transition metals acting as catalysts for water thermolysis, in particular such as cerium, nickel, molybdenum, or chromium.

6. The burner according to claim 5, **characterised in that** catalysts are present in the duct (7) with heat exchange medium, where the said duct (7) is formed by a steel pipe, heat-resistant, with an alloy addition of cerium, nickel, molybdenum, or chromium.

7. The burner according to claim 5 or 6, **characterised in that** catalysts are present in the form of nanoparticles diffused in water, and an ultrasound generator (17) is installed in the bottom part of the chamber (1), supporting their dispersion.
